# EUROPÄISCHE PATENTANMELDUNG

(11) **EP 3 656 553 A1**
(43) Veröffentlichungstag der Anmeldung: **27.05.2020**
(21) Anmeldenummer: 19207500.0
(22) Anmeldetag: 06.11.2019
(51) Int. Cl.: B32B 15/14, B32B 5/02, B32B 5/26, B32B 7/028, B32B 7/08, B32B 7/12, C08J 5/04

(54) **FASERVERBUNDWERKSTOFF**

(30) Priorität: 22.11.2018 DE 102018129384
(71) Anmelder: fischerwerke GmbH & Co. KG, 72178 Waldachtal (DE)
(72) Erfinder: Strieder, Emanuel, 9812 Pusarnitz (AT)
(74) Vertreter: Suchy, Ulrich Johannes

(57) **Zusammenfassung**

Die Erfindung schlägt einen Faserschichtverbundwerkstoff mit einer Mittelschicht (2) aus einem faserverstärkten Kunstharz vor, auf die beidseitig Bleche aus einer Formgedächtnislegierung (3) geklebt sind. Die Bleche sind pseudoelastisch und Fasern (4) elastisch gedehnt, so dass die Bleche unter einer Druckspannung und die Fasern (4) unter einer Zugspannung stehen. Durch Erwärmen auf oder über eine Umwandlungstemperatur der Formgedächtnislegierung (3) ziehen sich die Bleche zusammen, was die elastisch gedehnten Fasern (4) verstärken.

## Beschreibung

Die Erfindung betrifft einen Faserverbundwerkstoff, ein Verfahren zu seiner Herstellung und seine Verwendung mit den Merkmalen der Oberbegriffe der Ansprüche 1, 7 und 9.

Es sind Formgedächtnislegierungen bekannt. Formgedächtnislegierungen sind Metalllegierungen, die durch eine Phasenumwandlung ihrer Kristallstrukturen in der Regel zwischen Martensit und Austenit ihre Form ändern. Die Phasenumwandlung und Formänderung erfolgt bei Erreichen oder Überschreiten einer Umwandlungstemperatur. Zuvor muss die Formgedächtnislegierung verformt worden sein, was typischerweise, aber nicht zwingend, durch eine mechanische Verformung erfolgt, die anschließend durch Erwärmung auf oder über die Umwandlungstemperatur vollständig oder teilweise rückgängig gemacht werden kann. Die Verformung, nach der sich die Formgedächtnislegierung durch Erwärmung auf oder über die Umwandlungstemperatur vollständig oder teilweise rückverformt, wird als "pseudoplastische Verformung" bezeichnet. Es sind auch Formgedächtnislegierungen mit einem Zweiweg-Effekt bekannt, die sich bei hoher Temperatur umformen und bei niedriger Temperatur vollständig oder teilweise rückumformen. Hier soll unter einer Formgedächtnislegierung eine Metall- oder sonstige Legierung verstanden werden, die ihre Form ändert, wenn sie auf oder über eine Umwandlungstemperatur erwärmt wird, unabhängig davon, ob das durch eine Änderung ihrer Kristallstruktur oder in anderer Weise geschieht, und auch unabhängig davon, ob die Formgedächtnislegierung zuvor verformt, erwärmt oder gekühlt oder in sonstiger Weise behandelt worden ist.

Es sind auch Formgedächtnispolymere bekannt, die sich vergleichbar wie Formgedächtnislegierungen nach einer Umformung vollständig oder teilweise rückverformen, wenn sie auf oder über eine Umwandlungstemperatur erwärmt werden. Unter einem "Formgedächtniswerkstoff" soll allgemein ein Werkstoff verstanden werden, der sich verformt, insbesondere rückumformt und insbesondere verkürzt, wenn er auf oder über eine hier als Umwandlungstemperatur bezeichnete Temperatur erwärmt wird.

Die Patentanmeldung US 2011/0 300 358 A1 offenbart einen Faserschichtverbundwerkstoff mit Kohlenstofffasern aufweisenden Prepregs (vorimprägnierte Fasern), die auf Bleche oder Folien aus einer Formgedächtnislegierung laminiert sind. Es sind abwechselnd ein Prepreg und ein Blech oder eine Folie aus der Formgedächtnislegierung gestapelt aufeinander angeordnet. "Laminiert" bedeutet, dass die Prepregs stoffschlüssig mit den Blechen oder Folien aus der Formgedächtnislegierung verbunden sind. Durch Erwärmen auf oder über die Umwandlungstemperatur der Formgedächtnislegierung ändert der bekannte Faserschichtverbundwerkstoff seine Form.

Aufgabe der Erfindung ist, einen Faserverbundwerkstoff mit einem Formgedächtniswerkstoff vorzuschlagen, der eine höhere mechanische Kraft erzeugt, wenn er auf oder über die Umwandlungstemperatur des Formgedächtniswerkstoffs erwärmt und gegen eine Verformung gehalten wird.

Diese Aufgabe wird erfindungsgemäß durch die Merkmale des Anspruchs 1 gelöst.

Der erfindungsgemäße Faserverbundwerkstoff weist einen Formgedächtniswerkstoff und Fasern auf. Die Fasern sind beispielsweise Glas-, Stein-, Metall-, Keramik-, Kunststoff- und/oder Kohlenstofffasern bzw. Fasern, wie sie üblicherweise in faserverstärkten Kunststoffen verwendet werden. Es können auch Fasern aus verschiedenen Werkstoffen verwendet werden. Die Fasern können kurz oder lang sein, unidirektional, bidirektional, beliebig orientiert oder ungeordnet sein, es können Fasergewebe, -gewirke, -gestricke und/oder -vliese Verwendung finden. Die Aufzählungen sind beispielhaft und nicht abschließend.

Die Fasern sind mit dem Formgedächtniswerkstoff verbunden, so dass Kräfte zwischen den Fasern und dem Formgedächtniswerkstoff übertragen werden. Insbesondere sind die Fasern und der Formgedächtniswerkstoff schubfest verbunden bzw. es werden insbesondere Zug- und Druckkräfte von den Fasern auf den Formgedächtniswerkstoff übertragen und umgekehrt. Die Verbindung kann vollflächig, teilflächig oder stellenweise sein. Eine vollflächige Verbindung ist durch Stoffschluss, beispielsweise durch ein Verkleben der Fasern mit dem Formgedächtniswerkstoff mittels eines Kunstharzes möglich. Eine stellenweise Verbindung ist beispielsweise mechanisch beispielsweise mit Schrauben, Nieten, Stiften und/oder durch Festklemmen der Fasern auf dem Formgedächtniswerkstoff möglich.

Erfindungsgemäß ist der Formgedächtniswerkstoff pseudoplastisch gedehnt, so dass er sich verkürzt, wenn er auf oder über seine Umwandlungstemperatur erwärmt wird, und weist vor der Erwärmung auf oder über die Umwandlungstemperatur eine mechanische Druckspannung und die Fasern eine mechanische Zugspannung auf. Durch die Verkürzung des Formgedächtniswerkstoffs durch Erwärmung auf oder über seine Umwandlungstemperatur bauen sich die Druckspannung des Formgedächtniswerkstoffs und die Zugspannung der Fasern ab und erhöhen so eine Kraft, die der Faserverbundwerkstoff ausübt, gegenüber einer Kraft, die der Formgedächtniswerkstoff ohne die Fasern und ohne die Zug- und die Druckspannung ausüben würde.

Vorzugsweise weist der erfindungsgemäße Faserverbundwerkstoff die Form eines Stabs, einer Platte oder eines Bandes auf. Unter einem Stab ist ein Gebilde zu verstehen, das länger, insbesondere ein Mehrfaches oder Vielfaches länger als breit und dick ist. Ein Querschnitt ist grundsätzlich beliebig, beispielsweise rund oder eckig. Eine Platte und ein Band sind länger und breiter, insbesondere ein Mehrfaches oder Vielfaches länger und breiter, als dick, wobei ein Band zusätzlich ein Mehrfaches oder Vielfaches länger als breit ist.

Vorzugsweise weist der Faserverbundwerkstoff eine Formgedächtnislegierung als Formgedächtniswerkstoff auf.

Eine Ausgestaltung der Erfindung sieht vor, dass der Faserverbundwerkstoff einen faserverstärkten Kunststoff aufweist, der mit dem Formgedächtniswerkstoff verbunden ist und dessen Fasern die Zugspannung aufweisen.

Vorzugsweise ist der erfindungsgemäße Faserverbundwerkstoff ein Faserschichtverbundwerkstoff, das heißt er weist eine oder mehrere Schichten mit Fasern und eine oder mehrere Schichten aus dem Formgedächtniswerkstoff auf. Bevorzugt ist der Faserschichtverbundwerkstoff symmetrisch hinsichtlich einer Mittelebene, das heißt erweist eine Mittelschicht mit Fasern auf, auf dem beidseitig eine Schicht aus dem Formgedächtniswerkstoff angeordnet ist oder umgekehrt. Es können auch abwechselnd auf beiden Seiten der Mittelschicht gleich viele Schichten mit Fasern und aus dem Formgedächtniswerkstoff angeordnet sein.

Bevorzugt sind die Fasern stoffschlüssig mit dem Formgedächtniswerkstoff verbunden, sie können vollflächig bzw. durchgehend über ihre Länge oder auch nur stellenweise mit dem Formgedächtniswerkstoff verbunden sein. Zusätzlich können die Fasern beispielsweise mechanisch mit dem Formgedächtniswerkstoff verbunden sein.

Zur Herstellung des Faserverbundwerkstoffs schlägt die Erfindung vor, dass der Formgedächtniswerkstoff und die Fasern verbunden werden, vorzugsweise ohne dass die Fasern und/oder der Formgedächtniswerkstoff dabei eine mechanische Zug-, Druck- oder sonstige Spannung aufweisen, und dass danach der Formgedächtniswerkstoff gemeinsam mit den Fasern gedehnt wird. Dabei wird der Formgedächtniswerkstoff pseudoplastisch gedehnt, und die Fasern elastisch gedehnt. Nach dem Dehnen wird der Formgedächtniswerkstoff entspannt. Weder vorgesehen noch ausgeschlossen ist, dass der Formgedächtniswerkstoff beim Dehnen auch elastisch und/oder plastisch gedehnt und/oder die Fasern dabei auch plastisch gedehnt werden. Jedenfalls erhalten die Fasern durch das Dehnen eine Zugspannung, die durch den pseudoplastisch gedehnten Formgedächtniswerkstoff aufrecht erhalten wird. Die Zugspannung der Fasern erzeugt beim Entspannen des Formgedächtniswerkstoffs die Druckspannung in dem mit den Fasern verbundenen und pseudoplastisch gedehnten Formgedächtniswerkstoff. Wird der Faserverbundwerkstoff bzw. der Formgedächtniswerkstoff auf oder über seine Umwandlungstemperatur erwärmt, verkürzt er sich. Dadurch werden die Druckspannung im Formgedächtniswerkstoff und die Zugspannung in den Fasern zumindest teilweise abgebaut, wodurch die Verkürzung des Faserverbundwerkstoffs verstärkt (nicht unbedingt vergrößert) wird. Das bedeutet, dass eine Kraft, die der Faserverbundwerkstoff ausübt, vergrößert ist, wenn er auf oder über die Umwandlungstemperatur des Formgedächtniswerkstoffs erwärmt und gegen seine Verkürzung gehalten wird.

Vorzugsweise werden die Fasern stoffschlüssig, beispielsweise mittels eines Kunstharzes, mit dem Formgedächtniswerkstoff verbunden, wobei eine zusätzliche beispielsweise mechanische Verbindung möglich ist.

Anspruch 9 sieht vor, den erfindungsgemäßen Faserverbundwerkstoff bzw. ein aus dem Faserverbundwerkstoff bestehendes oder den Faserverbundwerkstoff aufweisendes Bauelement mit einem Bauteil zu verbinden und danach den Formgedächtniswerkstoff auf oder über die Umwandlungstemperatur zu erwärmen. Der Faserverbundwerkstoff bzw. das Bauelement und das Bauteil bilden zusammen einen Baukörper, beispielsweise eine Wand oder einen Träger eines Bauwerks. Der Faserverbundwerkstoff kann beispielsweise vollflächig oder teilflächig mit dem Bauteil verklebt und/oder zumindest stellenweise mechanisch mit dem Bauteil verbunden werden. Beispielsweise wird der Faserverbundwerkstoff auf einer Oberfläche einer Zugzone des Bauteils angebracht, das beispielsweise aus Beton, auch aus stahlarmiertem oder in sonstiger Weise verstärktem Beton besteht. Die Zugzone ist die Seite, die sich dehnt, wenn sich das Bauteil durch Belastung biegt oder allgemein verformt, so dass Zugspannungen in der Zugzone des Bauteils entstehen. Durch das Erwärmen des Formgedächtniswerkstoffs verkürzt sich der Faserverbundwerkstoff etwas und übt eine Druckkraft auf das Bauteil, mit dem er verbunden ist, aus. Die Druckkraft wirkt der Biegung oder allgemein Verformung und der Zugspannung in der Zugzone des Bauteils entgegen. Dadurch werden die Verformung und die mechanische Spannung in der Zugzone des Bauteils verringert.

Eine Ausgestaltung der Erfindung sieht vor, den erfindungsgemäßen Faserverbundwerkstoff mit einem aushärtenden Werkstoff, insbesondere mit Beton, zu umgießen. "Umgießen" umfasst ein vollständiges Eingießen, aber auch den Fall, dass der Faserverbundwerkstoff nur teilweise mit dem aushärtenden Werkstoff umschlossen wird. Der Faserverbundwerkstoff kann vor dem Gießen in einer Kavität eines Gießwerkzeugs oder an einer Betonschalung oder dgl. befestigt werden. Der aushärtende Werkstoff bzw. Beton kann eine Armierung oder eine sonstige Verstärkung aufweisen, an der der Faserverbundwerkstoff zum Umgießen mit dem aushärtenden Werkstoff bzw. Beton befestigt werden kann. Diese Ausgestaltung der Erfindung ermöglicht es, nach dem Aushärten des Werkstoffs durch Erwärmen des Formgedächtniswerkstoffs eine mechanische Druckspannung in dem aushärtenden Werkstoff bzw. Beton zu erzeugen. Durch Position und Lage des Faserverbundwerkstoffs in dem aushärtenden Werkstoff bzw. Beton lassen sich Zugspannungen und Verformungen gezielt entgegenwirken. Es können auch mehrere Faserverbundwerkstoffe bzw. Bauelemente aus dem Faserverbundwerkstoff bzw. den Faserverbundwerkstoff aufweisende Bauelemente mit dem aushärtenden Werkstoff bzw. Beton umgossen werden.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiterer Ausführungsbeispiele aufweisen, sind möglich.

Die Erfindung wird nachfolgend anhand eines in der Zeichnung dargestellten Ausführungsbeispiels näher erläutert. Es zeigen:
- Figur 1: ein Bauelement aus einem Faserverbundwerkstoff gemäß der Erfindung in einer perspektivischen, an einer Stelle aufgebrochenen Darstellung;
- Figur 2: einen Baukörper mit dem erfindungsgemäßen Faserverbundwerkstoff; und
- Figur 3: eine beabstandete Anordnung zweier paralleler Schaltafeln zum Betonieren mit einem Band aus einem Faserverbundwerkstoff gemäß der Erfindung.

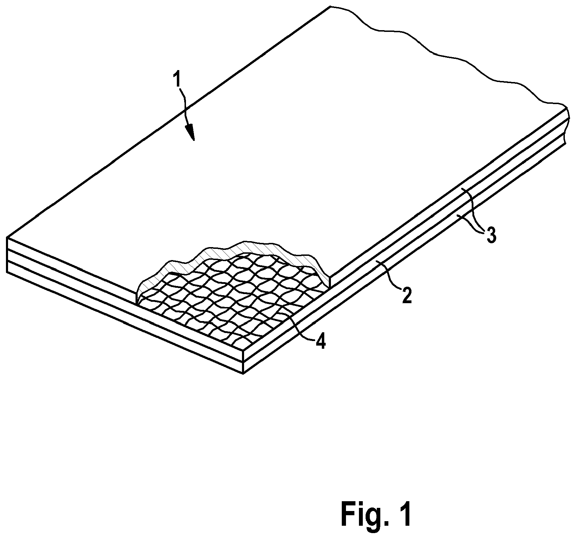

Figur 1 zeigt ein Band 1 aus einem Faserverbundwerkstoff und genauer aus einem Faserschichtverbundwerkstoff gemäß der Erfindung. Das Band 1 ist ein flächenförmiges Bauelement, das ein Mehrfaches länger als breit und ein Mehrfaches breiter als dick ist. Im Ausführungsbeispiel weist das Band 1 einen symmetrischen Aufbau auf, es weist eine Mittelschicht 2 aus Fasern und Kunstharz auf, auf der beidseitig Bleche bzw. Blechstreifen aus einer Formgedächtnislegierung 3 angeordnet sind. Die Formgedächtnislegierung 3 kann allgemein auch als Formgedächtniswerkstoff aufgefasst werden. "Faserverbundwerkstoff" bedeutet, dass das Band 1 oder allgemein ein Bauelement Fasern 4 in einem Verbund mit einem oder mehreren anderen Werkstoffen aufweist. Im Ausführungsbeispiel der Erfindung sind die Fasern 4 über das Kunstharz mit den Blechen bzw. Blechstreifen aus der Formgedächtnislegierung 3 klebend, also stoffschlüssig, verbunden. "Schichtverbundwerkstoff" bezeichnet den Schichtaufbau des Bandes 1 mit der Mittelschicht 2 aus Fasern 4 und den beidseitig darauf angeordneten Blechen aus der Formgedächtnislegierung 3. "Faserschichtverbundwerkstoff" bedeutet einen Fasern 4 aufweisenden Schichtverbundwerkstoff.

Als Fasern 4 weist die Mittelschicht 2 im Ausführungsbeispiel Kohlenstofffasern auf. Die Fasern 4 sind vorzugsweise in ihrer Längsrichtung elastisch dehnbar oder zumindest elastisch biegbar oder in anderer Weise elastisch verformbar. Im Ausführungsbeispiel weist die Mittelschicht 2 des Bandes 1 aus dem erfindungsgemäßen Faserverbundwerkstoff ein Gewebe aus den Fasern 4 auf.

Zur Herstellung des Faserschichtverbundwerkstoffs werden die beiden Bleche bzw. Blechstreifen aus der Formgedächtnislegierung 3 und die Mittelschicht 2 dazwischen aufeinander angeordnet, mittels des Kunstharzes miteinander verklebt und anschließend gedehnt. Zum Dehnen werden Enden der beiden Bleche bzw. Blechstreifen und der Mittelschicht 2 des Bandes 1 aus dem Faserschichtverbundwerkstoff zwischen Spannbacken festgespannt und die Spannbacken an den beiden Enden des Bandes 1 auseinander bewegt (nicht dargestellt). Dadurch wird das Band 1 gedehnt, wobei die Fasern 4 in der Mittelschicht 2 elastisch und die Bleche bzw. Blechstreifen aus der Formgedächtnislegierung 3 pseudoplastisch gedehnt werden. "Pseudoplastisch gedehnt" bedeutet bzw. hat zur Folge, dass sich die Formgedächtnislegierung 3 verkürzt, wenn sie auf oder über eine Umwandlungstemperatur erwärmt wird, bei der eine Gefügeumwandlung in der Formgedächtnislegierung 3 - üblicherweise von Martensit in Austenit - erfolgt. Es ist nicht zwingend für die Erfindung, dass das Band 1 mit Spannbacken gedehnt wird, es bestehen auch andere Möglichkeiten, die die Fasern 4 aufweisende Mittelschicht 2 und die Blechstreifen aus der Formgedächtnislegierung 3 zu dehnen.

Nach dem Dehnen wird das Band 1 ausgespannt, wodurch sich die elastisch gedehnten Fasern 4 zusammenziehen und dadurch die Bleche bzw. Blechstreifen aus der pseudoplastisch gedehnten Formgedächtnislegierung 3 mit einer mechanischen Druckspannung beaufschlagen. Weil die Bleche bzw. Blechstreifen dem Zusammenziehen der Fasern 4 einen Widerstand entgegensetzen, weisen die Fasern 4 eine Zugspannung auf.

Durch Erwärmen der beiden aus der Formgedächtnislegierung 3 bestehenden Bleche bzw. Blechstreifen auf oder über die Umwandlungstemperatur ziehen sich die Bleche zusammen, wodurch sich das Band 1 verkürzt. Wird das Band 1 entgegen der Verkürzung gehalten, übt es eine entgegengerichtete Zugkraft aus. Die elastisch gedehnten Fasern 4 unterstützen das Zusammenziehen der Bleche bzw. Blechstreifen aus der Formgedächtnislegierung 3, wodurch eine Zugkraft des aus dem erfindungsgemäßen Faserverbundwerkstoff bestehenden Bandes 1, der im Ausführungsbeispiel ein Faserschichtverbundwerkstoff ist, erhöht ist.

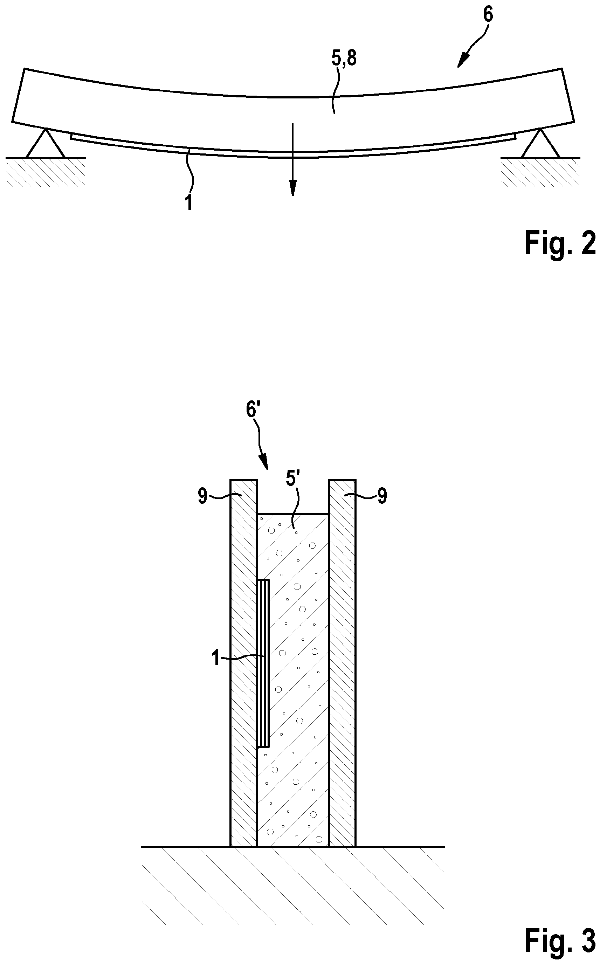

Zu einer erfindungsgemäßen Verwendung kann das den erfindungsgemäßen Faserschichtverbundwerkstoff aufweisende Band 1 beispielsweise auf ein Bauteil 5 geklebt oder in anderer Weise mit dem Bauteil 5 verbunden werden. Figur 2 zeigt das Band 1 auf eine Unterseite eines Tragbalkens 8 als Bauteil 5 geklebt, der sich durch sein Eigengewicht und ggf. eine zusätzliche Belastung biegt. Das Band 1 und der Tragbalken 8 bilden einen Baukörper 6. Das Band 1 ist auf die Unterseite, also auf die Seite des Tragbalkens 8 geklebt, die durch die Biegung gedehnt wird, wodurch mechanische Zugspannungen in dem Tragbalken 8 entstehen. Der Bereich des Tragbalkens 8, in dem durch die Biegung oder allgemein Verformung Zugspannungen entstehen, wird als Zugzone bezeichnet. Das auf die Unterseite des das Bauteil 5 bildenden Tragbalkens 8 geklebte Band 1 wird auf oder über die Umwandlungstemperatur erwärmt, wodurch es sich zusammenzieht und eine Druckkraft in der Zugzone in den Tragbalken 8 einleitet, die der Biegung des Tragbalkens 8 entgegenwirkt. Das Band 1 kann im Neuzustand oder zur Sanierung beispielsweise von Brücken auf den das Bauteil 5 bildenden Tragbalken 8 geklebt werden. Es können beispielsweise auch mehrere Bänder 1 auf gegenüberliegenden Seiten oder allseitig auf ein auf Zug beanspruchtes Bauteil 5 geklebt werden (nicht dargestellt). Durch Erwärmen auf oder über die Umwandlungstemperatur ziehen sich die Bänder zusammen und leiten Druckkräfte in das Bauteil 5 ein, die dessen Dehnung entgegengerichtet sind.

In Figur 3 ist das Band 1 an einer Schalfläche einer Schaltafel 9 zum Betonieren angebracht. Die Schaltafel 9 ist mit Abstand und parallel zu einer zweiten Schaltafel 9 aufgestellt, so dass durch Einfüllen von Beton zwischen die beiden Schaltafeln 9 ein Bauteil 5' aus Beton herstellbar ist, das das Band 1 auf einer Seite aufweist. Das Band 1' und das Bauteil 5' bilden zusammen eine Wand als Baukörper 6'. Der Beton kann allgemein auch als aushärtender Werkstoff aufgefasst werden, mit dem das Band 1 verbunden ist. Es können auch mehrere Bänder 1 an der Schaltafel 9 oder an beiden Schaltafeln 9 angebracht werden. Sofern eine Armierung zwischen den beiden Schaltafeln 9 angeordnet ist oder wird, kann ein oder können mehrere Bänder 1 auch an der Armierung angebracht werden, so dass sie sich später innerhalb des Bauteils 5' aus Beton befinden (nicht dargestellt).

### Bezugszeichenliste

- 1: Band
- 2: Mittelschicht
- 3: Formgedächtnislegierung
- 4: Faser
- 5, 5': Bauteil
- 6, 6': Baukörper
- 8: Tragbalken
- 9: Schaltafel

## Patentansprüche

1. Faserverbundwerkstoff, aufweisend einen pseudoplastisch gedehnten Formgedächtniswerkstoff und Fasern (4), die mit dem Formgedächtniswerkstoff verbunden sind, **dadurch gekennzeichnet, dass** der Formgedächtniswerkstoff eine Druckspannung und die Fasern (4) Zugspannung aufweisen.

2. Faserverbundwerkstoff nach Anspruch 1, **dadurch gekennzeichnet, dass** der Faserverbundwerkstoff ein stabförmiges oder flächenförmiges Bauelement bildet.

3. Faserverbundwerkstoff nach Anspruch 1 oder 2, **dadurch gekennzeichnet, dass** der Faserverbundwerkstoff eine Formgedächtnislegierung (3) als Formgedächtniswerkstoff aufweist.

4. Faserverbundwerkstoff nach einem oder mehreren der Ansprüche 1 bis 3, **dadurch gekennzeichnet, dass** der Faserverbundwerkstoff einen faserverstärkten Kunststoff aufweist, der mit dem Formgedächtniswerkstoff verbunden ist und dessen Fasern (4) die Zugspannung aufweisen.

5. Faserverbundwerkstoff nach einem oder mehreren der vorhergehenden Ansprüche, **dadurch gekennzeichnet, dass** der Faserverbundwerkstoff ein Faserschichtverbundwerkstoff ist.

6. Faserverbundwerkstoff nach einem oder mehreren der vorhergehenden Ansprüche, **dadurch gekennzeichnet, dass** die Fasern (4) stoffschlüssig mit dem Formgedächtniswerkstoff verbunden sind.

7. Verfahren zur Herstellung eines Faserverbundwerkstoffs nach einem oder mehreren der vorhergehenden Ansprüche, **dadurch gekennzeichnet, dass** der Formgedächtniswerkstoff mit den Fasern (4) verbunden und dass danach der Formgedächtniswerkstoff pseudoplastisch gedehnt und dabei die Fasern (4) elastisch gedehnt werden.

8. Verfahren nach Anspruch 7, **dadurch gekennzeichnet, dass** die Fasern (4) stoffschlüssig mit dem Formgedächtniswerkstoff verbunden werden.

9. Verfahren zur Herstellung eines Baukörpers (6, 6') mit einem Faserverbundwerkstoff nach einem oder mehreren der Ansprüche 1 bis 6, **dadurch gekennzeichnet, dass** der Faserverbundwerkstoff mit einem Bauteil (5, 5') verbunden und der Formgedächtniswerkstoff danach auf oder über eine Umwandlungstemperatur erwärmt wird, so dass er sich zusammenzieht und eine Druckkraft in das zweite Bauteil (5, 5') einleitet.

10. Verfahren zur Herstellung eines Baukörpers (6, 6') mit einem Faserverbundwerkstoff nach Anspruch 9, **dadurch gekennzeichnet, dass** der Faserverbundwerkstoff mit einem aushärtenden Werkstoff umgossen wird.
